# FASCICULE DE BREVET EUROPEEN

(11) **EP 0 811 783 B1**
(45) Date de publication et mention de la délivrance du brevet: **07.08.2002**
(21) Numéro de dépôt: 97401273.4
(22) Date de dépôt: 06.06.1997
(51) Int. Cl.: F16D 65/12

(54) **Disque de frein ventilé**
Belüftete Bremsscheibe
Ventilated brake system

(30) Priorité: 07.06.1996 FR 9607049
(43) Date de publication de la demande: 10.12.1997
(73) Titulaire: RENAULT VEHICULES INDUSTRIELS, 69800 Saint Priest (FR)
(72) Inventeur: Berthaud, Jean, 38790 Saint-Georges-D'Esperanche (FR); Velard, Pierre, 69110 Sainte-Foy-Les-Lyon (FR)
(74) Mandataire: Palix, Stéphane

(56) Documents cités:
- BE-A- 687 677
- FR-A- 2 498 711
- FR-A- 2 662 771
- US-A- 2 369 328

## Description

La présente invention concerne un disque de frein ventilé, notamment pour véhicule routier, comportant un moyeu destiné à être fixé sur la pièce à freiner et deux couronnes annulaires coaxiales, reliées entre elles par des nervures délimitant des conduits de refroidissement.

Les disques de frein comportent de façon classique deux pistes de frottement, raccordées à un moyeu fixé sur la pièce à freiner. L'augmentation des puissances de freinage requises sur certains véhicules routiers, tels que les véhicules industriels, conduit à optimiser les capacités de refroidissement des disques de frein.

Lorsque les disques de frein comportent deux couronnes espacées, leur raccordement au moyeu peut s'effectuer sur la couronne intérieure (côté véhicule), ou sur la couronne extérieure (côté jante). Dans les deux cas, les couronnes risquent parfois de se fissurer, notamment au niveau des zones de raccordement, en raison des températures très élevées auxquelles celles-ci sont soumises.

Pour augmenter la dissipation thermique au sein d'un frein à disque à double couronne, la publication FR 2 662 771 au nom de la demanderesse, propose de créer un flux d'air entre les nervures de liaison des deux couronnes, grâce à l'alternance de leurs zones de raccordement sur le moyeu. Cette disposition, permet notamment d'équilibrer les températures entre les pistes de frottement extérieures et intérieures du disque. Cependant elle s'avère insuffisante pour exclure, tout risque de fissuration des couronnes.

Le document US-A-2 369 328 décrit un organe de frein ventilé, dans lequel les orifices d'évacuation de l'air ont une section inférieure à celle des orifices d'entrée.

La présente invention vise à améliorer la ventilation d'un frein à disque à double couronne à raccordement alterné sur le moyeu.

Elle concerne un disque de frein ventilé, notamment pour véhicule routier, comportant d'une part un moyeu de fixation sur la pièce à freiner, et d'autre part deux couronnes annulaires coaxiales, raccordées au moyeu par des pattes de liaisons alternées convergeant radialement vers le moyeu de façon à délimiter des orifices d'entrée d'air entre les couronnes, et reliées entre elles par des nervures délimitant des conduits d'évacuation d'air vers la circonférence extérieure des couronnes. Ce disque de frein est caractérisé en ce que les orifices d'évacuation des conduits ont une section inférieure à celle des orifices d'entrée, et surtout en ce que les nervures présentent la forme générale d'un Y dont les deux branches sont orientées vers l'extérieur.

La ventilation des pistes de frottement de chaque couronne est également facilitée par le chevauchement partiel de leurs pattes de liaison.

D'autres caractéristiques et avantages de l'invention apparaîtront clairement à la lecture de la description suivante d'un mode de réalisation particulier de celle-ci, en liaison avec les dessins annexés, sur lesquels :
- la figure 1 est une vue de face côté moyeu du disque de frein proposé, avec une coupe partielle au niveau des nervures, et
- la figure 2 est une coupe selon A-A de la figure 1.

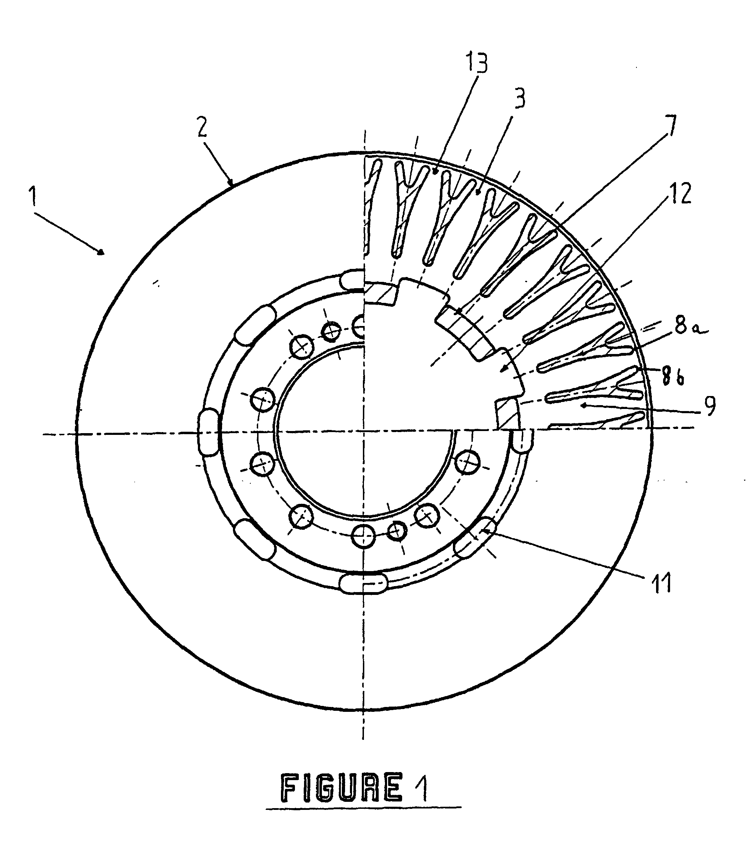

Le disque de frein ventilé (1) représenté sur les figures comporte deux couronnes annulaires (2, 3), raccordées alternativement au moyeu 4 par l'intermédiaire de pattes de liaison (6, 7) se chevauchant partiellement. Les pattes de liaison (6, 7) de la première et de la seconde couronne (2, 3), convergent radialement vers le.moyeu (4), et sont disposées régulièrement autour de celui-ci. Les couronnes (2, 3), sont par ailleurs reliées entre elles par des nervures (8), mises en évidence dans la partie en coupe de la figure 1, qui délimitent des conduits d'évacuation d'air 9, vers la circonférence extérieure des couronnes 2, 3.

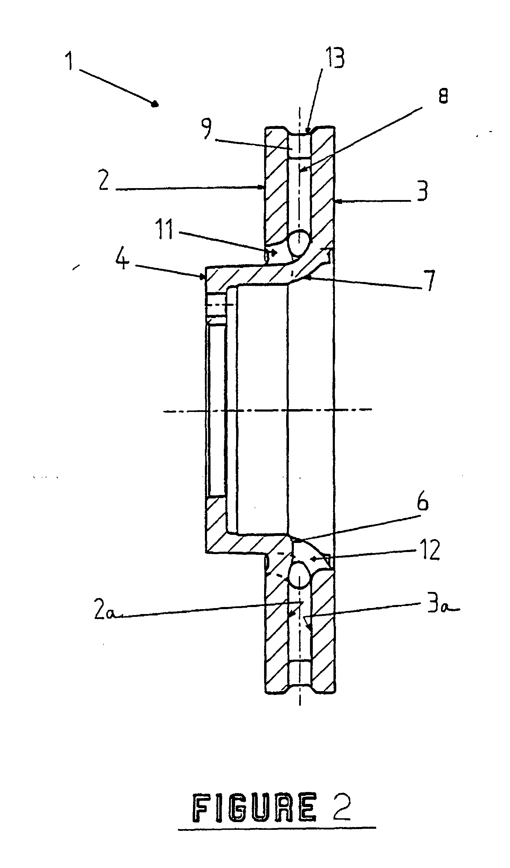

La coupe de la figure 2, passant dans sa partie supérieure par une patte de liaison 7 appartenant à la couronne 3 la plus éloignée du moyeu 4, et dans sa partie inférieure par une patte de liaison 6 appartenant à la couronne 2 la plus proche de celui-ci, montre par ailleurs que les pattes 6, 7 délimitent des orifices d'entrée d'air 11, 12 entre les couronnes, également mentionnés sur la figure 1.

Comme indiqué plus haut, les pattes de liaison 6, 7 des deux couronnes 2, 3 se chevauchent partiellement. Cette disposition facilite l'introduction de l'air dans les conduits 8. Elle permet par ailleurs de donner aux pattes de liaison 6, 7 un rayon de courbure relativement important, nécessaire pour garantir à celles-ci une résistance mécanique suffisante.

L'invention prévoit notamment de donner aux nervures 8 une structure particulière, visant à optiniiser la ventilation des pistes de frottement 2a, 3a de chaque couronne 2, 3. Ce résultat est obtenu en rapprochant les extrémités extérieures 8a des nervures 8 de chaque conduit 9, afin de donner aux orifices de sortie d'air 13 une section plus étroite que celle des orifices d'entrée 11, 12. Une telle disposition, permettant d'augmenter la vitesse de circulation de l'air chaud dans les conduits 9 accroît de manière très significative les échanges thermiques au niveau des couronnes 2, 3, car le flux d'air est contraint de balayer les parois intérieures 2a, 3a de celles-ci et les parois latérales 8a, 8b des nervures 8. Associée par exemple au chevauchement des pattes de liaison et/ou au grand rayon de celles-ci, elle procure au disque de frein proposé une très grande capacité de refroidissement.

Le mode de réalisation illustré par la figure 2, selon lequel les nervures 8 ont une forme générale en Y dont les deux branches sont orientées vers l'extérieur du disque présente l'avantage d'être particulièrement simple à industrialiser.

## Revendications

1. Disque de frein ventilé (1), notamment pour véhicule routier, comportant d'une part un moyeu de fixation (4) sur la pièce à frein et d'autre part deux couronnes annulaires coaxiales (2, 3), raccordées au moyeu (4) par des pattes de liaisons alternées (6, 7) convergeant radialement vers le moyeu (4) de façon à délimiter des orifices d'entrée d'air (11, 12) entre les couronnes (2, 3), et reliées entre elles par des nervures (8) délimitant des conduits d'évacuation d'air (9) vers la circonférence extérieure des couronnes (2, 3), **caractérisé en ce que** les extrémités (8) des conduits (9) sont rapprochées de sorte que les orifices d'évacuation (13) des conduits (9) ont une section inférieure à celle des orifices d'entrée (11,12), et **en ce que** les nervures (8) ont la forme générale d'un Y, dont les deux branches sont orientées vers l'extérieur.

2. Disque de frein selon la revendication 1, **caractérisé en ce que** les pattes de liaison (6,7) des deux couronnes (2,3) se chevauchent partiellement.

## Claims

1. Ventilated brake disc (1), particularly for a road vehicle, comprising, on the one hand, a hub (4) for fixing to the brake part and, on the other hand, two coaxial annular rings (2, 3), connected to the hub (4) via alternating connecting pads (6, 7) converging radially towards the hub (4) so as to delimit air inlet orifices (11, 12) between the rings (2, 3), and connected together by ribs (8) delimiting air discharge ducts (9) discharging towards the external circumference of the rings (2, 3), **characterized in that** the ends (8) of the ducts (9) are close together so that the discharge orifices (13) of the ducts (9) have a cross section smaller than that of the inlet orifices (11, 12) and **in that** the ribs (8) have the overall shape of a Y, the two branches of which are directed outwards.

2. Brake disc according to Claim 1, **characterized in that** the connecting tabs (6, 7) of the two rings (2, 3) partially overlap.

## Patentansprüche

1. Belüftete Bremsscheibe (1), insbesondere für Straßenfahrzeuge, mit einerseits einer Nabe (4) zur Befestigung an dem zu bremsenden Teil und andererseits mit zwei koaxialen ringförmigen Kränzen (2,3), welche mit der Nabe (4) über abwechselnde Verbindungsabschnitte (6,7) verbunden sind, welche radial zur Nabe (4) hin konvergieren, um Öffnungen (11,12) für den Lufteintritt zwischen den Kränzen (2,3) zu begrenzen, und welche untereinander über Rippen (8) verbunden sind, welche Kanäle (9) für das Ausströmen der Luft zum äußeren Umfang der Kränze (2,3) hin begrenzen, **dadurch gekennzeichnet, daß** die Enden (8) der Kanäle (9) derart einander angenähert sind, daß die Ausströmöffnungen (13) der Kanäle (9) einen kleineren Querschnitt aufweisen als die Eintrittsöffnungen (11,12) und daß die Rippen (8) die allgemeine Form eines "Y" aufweisen, dessen zwei Arme nach außen gerichtet sind.

2. Bremsscheibe nach Anspruch 1, **dadurch gekennzeichnet, daß** die Verbindungsabschnitte (6,7) der zwei Kränze (2,3) einander teilweise überlappen.
